# EUROPEAN PATENT APPLICATION

(11) **EP 4 779 695 A1**
(43) Date of publication of application: **22.07.2026**
(21) Application number: 25861679.6
(22) Date of filing: 10.01.2025
(51) Int. Cl.: H01M 4/00

(54) **POSITIVE ELECTRODE MATERIAL, PREPARATION METHOD THEREFOR, POSITIVE ELECTRODE SHEET, AND BATTERY**

(30) Priority: 24.10.2024 CN 202411499381
(71) Applicant: Eve Power Co., Ltd., Jingmen, Hubei 448000 (CN)
(72) Inventor: WANG, Kai, Jingmen, Hubei 448000 (CN); LIU, Fanfen, Jingmen, Hubei 448000 (CN); ZHANG, Huan, Jingmen, Hubei 448000 (CN); SHI, Zhongyang, Jingmen, Hubei 448000 (CN)
(74) Representative: Studio Torta S.p.A.
(86) International application number: PCT/CN2025/071805
(87) International publication number: WO 2026/086032

(57) **Abstract**

A positive electrode material, and a preparation method thereof, a positive electrode sheet, and a battery are provided. The positive electrode material includes a nickel-cobalt-manganese-aluminum quaternary positive electrode material and a lithium iron phosphate positive electrode material. A chemical formula of the nickel-cobalt-manganese-aluminum quaternary positive electrode material is Li₍₁₊ᵤ₎NiᵥMn_{w}CoₓAl_{y}A_{z}O₂, where u≥0, v+w+x+y+z=1. A chemical formula of the lithium iron phosphate positive electrode material is Li₁₊ₖFe(PO₄)₁₊ₘBₙ, in which k, m, and n≥0; and both A and B are doping elements. A mass ratio of the nickel-cobalt-manganese-aluminum quaternary positive electrode material to the lithium iron phosphate positive electrode material is (0.5 to 7.0):(3.0 to 9.5).

## Description

The present disclosure claims the benefit of priority of Chinese Patent Application 202411499381.2, filed with China National Intellectual Property Administration on October 24, 2024, the contents of which is incorporated herein by reference in its entirety.

### TECHNICAL FIELD

The present disclosure belongs to the field of lithium-ion batteries, and particularly to a positive electrode material and a preparation method thereof, a positive electrode sheet, and a battery.

### BACKGROUND

Lithium-ion batteries (LiB) have been widely used in the fields of consumer electronics products, electric vehicles, aerospace, and the like due to their high energy density, high coulomb efficiency, long service life, no memory effect, low self-discharge characteristics, and chemical formulas with different electrode designs. A lithium-ion battery consists of a complex material system, including a positive electrode material, a negative electrode material, a separator, electrolyte, and the like. Among them, the positive electrode material is a decisive factor in the chemical properties of the lithium-ion battery, directly determining the energy density and the safety of the battery, thereby affecting the comprehensive performance of the battery. Meanwhile, the proportion of cost of the positive electrode material in the cost of the lithium battery material is as high as 30% to 40%, and its cost directly determines the overall cost of the battery. Therefore, the positive electrode material plays an important role in the lithium battery and directly leads the development of the lithium battery industry. The lithium battery is divided according to a positive electrode material system, and is mainly divided into technical routes such as lithium cobalt oxide (LCO), lithium manganate oxide (LMO), lithium iron phosphate (LFP), and ternary materials (lithium nickel cobalt manganate (NCM), and lithium nickel cobalt aluminate (NCA)).

### SUMMARY

Currently, the mainstream positive electrode materials used in the lithium battery industry are lithium iron phosphate (LFP) and ternary materials (lithium nickel cobalt manganate (NCM), and lithium nickel cobalt aluminate (NCA)), both of which have their own advantages and disadvantages as follows:
(1) As for lithium iron phosphate (LFP) material, its crystal structure is olivine-type, and the structure is stable. During the charging and discharging process, the intercalation and deintercalation of Li⁺ will hardly change structure of the material. Therefore, the LFP material has good safety performance and long cycle life (at least 2000 times or more). At the same time, LFP material is rich in production resources, and its cost is lower than other positive electrode materials. However, due to the fact that the LFP particles themselves are substantially insulated, the electronic conductivity is poor, resulting in poor rate, low temperature and fast charging performance. Meanwhile, due to the influence of its structure, on the one hand, the powder compaction is relatively low, the limit theoretical calculation value can only reach 2.80 g/cm³, and the current actual value can only reach about 2.62 g/cm³. However, the powder compaction of the ternary materials can reach more than 3.00 g/cm³. The difference is obvious. Therefore, the capacity of a single cell is indirectly affected. On the other hand, effects of the storage performance of the olivine structure for Li⁺ also result in a relatively low energy density of the LFP materials (140 Wh/kg to 160 Wh/kg, up to 180 Wh/kg), while the energy density of ternary materials has reached as high as 300 Wh/kg, which is more than 60% higher than LFP. It is difficult for the energy density of the LFP materials to meet the requirements of the new energy automobile market for long voyages.
(2) As for ternary material: its structure is layered. Currently, typical ternary positive electrode materials include 442, 532, 622, and 811 (Ni:Mn:Co) materials, which have the advantages of high energy density (up to 300 Wh/kg) and good fast charging performance. However, the elements used, such as Ni and Co, are precious metals, which have high cost. Ternary materials are layered oxides, which lose oxygen during the cycle process, thus promoting the generation of structural phase transitions, forming spinel structures, and producing structural defects such as dislocations, grain boundaries, and microcracks in the bulk structure. The generation of these defects will expose more new surfaces, through which active lithium ions undergo some chemical reaction with the electrolyte to consume the electrolyte and active lithium ions, thereby increasing the internal resistance of the battery. The electrolyte reacts to produce gas, which results in an increase in the internal pressure of the battery, thereby affecting the stability and safety of the battery, resulting in poor stability and safety of the ternary materials.

The present disclosure provides a positive electrode material, which includes a nickel-cobalt-manganese-aluminum quaternary positive electrode material and a lithium iron phosphate positive electrode material; a chemical formula of the nickel-cobalt-manganese-aluminum quaternary positive electrode material is Li₍₁₊ᵤ₎NiᵥMn_{w}CoₓAl_{y}A_{z}O₂, in which u≥0, and v+w+x+y+z=1; a chemical formula of the lithium iron phosphate positive electrode material is Li₁₊ₖFe(PO₄)₁₊ₘBₙ, in which k, m, and n≥0; both A and B are doping elements; and a mass ratio of the nickel-cobalt-manganese-aluminum quaternary positive electrode material to the lithium iron phosphate positive electrode material is (0.5 to 7.0):(3.0 to 9.5).

The present disclosure further provides a method of preparing a positive electrode material, which is used to prepare the positive electrode material as described above. The method includes: S1. mixing a nickel-cobalt-manganese-aluminum quaternary positive electrode material and a lithium iron phosphate positive electrode material in water to obtain a mixed system, and grinding particles in the mixed system to have a particle size ranging from 1 µm to 10 µm to obtain a slurry; S2. subjecting the slurry to spray drying at a drying temperature ranging from 90°C to 100°C, and controlling the size of the particles after drying to be in a range of 5 µm to 20 µm; and S3. performing jet-milling and mechanical milling sequentially to obtain the positive electrode material.

The present disclosure further provides a positive electrode sheet including the positive electrode material described above, the positive electrode sheet has a compaction density ranging from 3.2 g/cm³ to 4.2 g/cm³.

The present disclosure further provides a battery including a positive electrode sheet described above.

### BENEFICIAL EFFECTS

According to the positive electrode material provided in the embodiments of the present disclosure, NCMA (nickel-cobalt-manganese-aluminum quaternary positive electrode material) and LFP (lithium iron phosphate), both of which contain metal doping elements, are used in combination at a specific ratio, thereby effectively makes up for the deficiencies of the two positive electrode materials themselves, so that the finally obtained positive electrode material has both high energy density and high safety performance, and has excellent fast charging performance, thereby effectively improving the compaction density of the positive electrode sheet and the battery capacity. Moreover, due to the introduction of LFP, the amount of precious metal cobalt can be effectively reduced, thus reducing the cost of raw materials.

According to the method of preparing a positive electrode material provided in the embodiments of the present disclosure, the mixing effect of the nickel-cobalt-manganese-aluminum quaternary positive electrode material and the lithium iron phosphate positive electrode material is relatively good, so that the transmission is more smooth during the charging and discharging cycle. Meanwhile, due to better mixing effect, the composite positive electrode material has higher electrical conductivity and powder compaction density, thereby effectively improving the energy density, capacity and rapid charging performance of the positive electrode material.

The positive electrode sheet provided in the embodiments of the present disclosure, by including the positive electrode material described above, has high compaction density, and has excellent ionic and electronic conductivity, so that the structure of the positive electrode sheet can be kept stable after multiple charging and discharging cycles.

The battery provided in the embodiments of the present disclosure, by including the positive electrode sheet that has high structural stability, high compaction density, and excellent ionic and electronic conductivity described above, has high energy density, high safety performance, and excellent fast charging performance.

### DETAILED DESCRIPTION

In description of the present disclosure, the terms "connection", "linking" and "fixing" should be broadly understood, for example, it may be a fixed connection, a detachable connection, or an integral connection, unless otherwise clearly specified and defined. It may be a mechanical connection or an electrical connection. It may be a direct connection or an indirect connection via an intermediate medium, may be an internal communication within two elements or an interaction between two elements. The specific meaning of the above terms in the present disclosure may be understood by a person skilled in the art according to specific situations.

In the present disclosure, unless clearly specified and limited otherwise, a first feature "above" or "below" a second feature may include direct contact of the first feature and the second feature, and it may also be included that the first feature and the second feature are not in direct contact but are contacted by additional features between them. Moreover, the first feature "on", "above" and "upper" the second feature includes the first feature directly above and obliquely upward the second feature, or merely indicates that a level of the first feature is higher than a level of the second feature. The first feature "lower", "below" and "under" the second feature includes the first feature directly below and obliquely downward the second feature, or merely indicates that a level of the first feature is less than a level of the second feature.

In the description of the present disclosure, terms such as "above", "below", "left", "right", "front", "back" refer to the orientation or positional relationship shown in the appended drawings, and are only for the purpose of facilitating the description and simplifying of operation, rather than indicating or implying that the apparatus or component referred to must have a particular orientation or must be configured or operated in a particular orientation, therefore should not be construed as a limitation towards the present disclosure. In addition, terms such as "first", "second" are merely for the purpose of description and should not be construed as an indication or implication of relative importance thereof.

In a first aspect, embodiments of the present disclosure provide a positive electrode material, which includes a nickel-cobalt-manganese-aluminum quaternary positive electrode material and a lithium iron phosphate positive electrode material; a chemical formula of the nickel-cobalt-manganese-aluminum quaternary positive electrode material is Li₍₁₊ᵤ₎NiᵥMn_{w}CoₓAl_{y}A_{z}O₂, in which u≥0, and v+w+x+y+z=1; a chemical formula of the lithium iron phosphate positive electrode material is Li₁₊ₖFe(PO₄)₁₊ₘBₙ, in which k, m, and n≥0; both A and B are doping elements; and a mass ratio of the nickel-cobalt-manganese-aluminum quaternary positive electrode material to the lithium iron phosphate positive electrode material is (0.5 to 7.0):(3.0 to 9.5).

The lithium iron phosphate (LFP) positive electrode material has good structural stability, high safety performance, and long cycle life, but its electronic conductivity is poor, resulting in poor rate, low temperature and fast charging performance, and low powder compaction density, so that the battery capacity is low, and the energy density is also low. Therefore, how to improve the performance of LFP materials to improve the electrochemical properties such as energy density, compaction density, and capacity is of great significance to whether LFP can be widely used in lithium-ion batteries. The nickel-cobalt-manganese-aluminum quaternary positive electrode material (NCMA) is manufactured by adding Al to a conventional high-nickel NCM positive electrode material, and has excellent properties such as high energy density and capacity. By doping Al, the NCMA can make up for the deficiency in stability of the NCM, and can increase the proportion of the nickel content, thereby greatly increasing the battery capacity. Moreover, although the addition of Al will cause a slight loss in capacity, the addition of Al significantly improves the cycle life and thermal stability of the material. Therefore, due to the improvement of the comprehensive performance of NCMA, NCMA has become a competitive choice for positive electrode materials, and has been widely studied and applied in recent years. However, since NCMA is also a layered oxide, even if it has high energy density, its structural degradation under a long cycle, capacity decay under a high rate, and structural phase transitions under a high pressure become factors that affect the safety of the material and limit the performance of electrochemical performance.

In the present disclosure, NCMA and LFP (lithium iron phosphate), both of which contain metal doping elements, are used in combination at a specific ratio, thereby effectively makes up for the deficiencies of the two positive electrode materials themselves, so that the finally obtained positive electrode material has both high energy density and high safety performance, and has excellent fast charging performance, thereby effectively improving the compaction density of the positive electrode sheet and increasing the battery capacity. Moreover, due to the introduction of LFP, the amount of precious metal cobalt can be effectively reduced, thus reducing the cost of raw materials.

Firstly, a certain amount of doping elements are introduced into both the NCMA and the LFP, respectively, which can produce favorable lattice defects or widen the diffusion channels of Li ions, improve the diffusion kinetics of Li ions in the lattice, and improve ionic and electronic conductivity of the material, thus improving the electrochemical performance of the material. Secondly, NCMA and the LFP are used in combination at a specific ratio. Since NCMA has high energy density, high capacity, and the like, and LFP has an excellent cycle life and safety performance, the positive electrode material obtained by compounding the two materials at a specific ratio can give full play to the electrochemical performance advantages of each of the two materials, thereby effectively making up for the deficiencies of the two materials themselves. In this way, the finally obtained positive electrode material has high energy density, high safety performance, high voltage density, high battery capacity, good fast charging performance, and excellent comprehensive performance. Furthermore, due to the differences in the structures of the NCMA and LFP particles, the combination of the two materials can complement each other (filling the gaps between the particles) during the filling process, thereby effectively improving the compaction density of the material powders and the compaction density of the pure LFP, thus effectively increasing the battery capacity.

In some embodiments, the mass ratio of the nickel-cobalt-manganese-aluminum quaternary positive electrode material to the lithium iron phosphate anode material is (1 to 4):(6 to 9). In some embodiments, the mass ratio of the nickel-cobalt-manganese-aluminum quaternary positive electrode material to the lithium iron phosphate anode material is 2.5:7.5.

In some embodiments, the particle size of the positive electrode material ranges from 0.1 µm to 2 µm, and the particle size distribution is as follows: a mass ratio of particles with a size of 0.1 µm to 0.3 µm ranges from 35% to 45%, a mass ratio of particles with a size of 0.3 µm to 0.5 µm ranges from 15% to 25%, a mass ratio of particles with a size of 0.5 µm to 1 µm ranges from 15% to 25%, a mass ratio of particles with a size of 1 µm to 1.5 µm ranges from 5% to 15%, and a mass ratio of particles with a size of 1.5 µm to 2 µm ranges from 5% to 15%. Firstly, in the present disclosure, the overall particle size of the positive electrode material is controlled within a small range, which is beneficial to improve the specific surface area of particles of the positive electrode material, improve the infiltration capacity of the electrolyte, shorten the diffusion particle size of lithium ions, thus facilitating intercalation and deintercalation of Li⁺, and improving the rate performance and first capacity of lithium ion batteries. Secondly, in the present disclosure, the specific particle size distribution is also defined. Within the above particle size distribution range, the void volume between particles can be reduced, so that the compaction density of the powders can be increased, thus increasing the compaction density of the electrode sheet, and thereby improving the electrochemical performance such as battery capacity. Since the particle size is within the above-mentioned range, especially, particles with a size of 0.1 µm to 0.3 µm is controlled to account for a large proportion, the void volume between particles is effectively reduced, so that particles of the positive electrode material can support each other, thus effectively improving its structural stability during the charging and discharging process, thereby achieving the charging and discharging of the positive electrode material at a high rate, and effectively improving the fast charging performance of the positive electrode material. In addition, because the void volume between particles of the positive electrode material is small, the energy density of the positive electrode material is also effectively improved.

In some embodiments, the doping element A includes at least one of Ti, K, Ca, Sc, V, Rb, Sr, Y, Zr, Nb, Mo, Te, Ru.

In some embodiments, the doping element B includes at least one of Ti, K, Ca, Sc, V, Rb, Sr, Y, Zr, Nb, Mo, Te, Ru.

Both the doping element A and the doping element B listed above can effectively produce favorable lattice defects or widen the diffusion channels of Li ions, improve the diffusion kinetics of Li ions in the lattice, and improve ionic and electronic conductivity of the material, thus improving the electrochemical performance of the material.

In some embodiments, the particle size distribution of the positive electrode material is as follows: a mass ratio of particles with a size of 0.1 µm to 0.3 µm is 40%, a mass ratio of particles with a size of 0.3 µm to 0.5 µm is 20%, a mass ratio of particles with a size of 0.5 µm to 1 µm is 20%, a mass ratio of particles with a size of 1 µm to 1.5 µm is 10%, and a mass ratio of particles with a size of 1.5 µm to 2 µm is 10%.

In some embodiments, in the nickel-cobalt-manganese-aluminum quaternary positive electrode material, the doping amount of the doping element A ranges from 200 ppm to 6000 ppm. In the lithium iron phosphate positive electrode material, the doping amount of the doping element B ranges from 200 ppm to 6000 ppm. By controlling the doping amount of doping elements in the nickel-cobalt-manganese-aluminum quaternary positive electrode material and the lithium iron phosphate positive electrode material within a certain numerical range, a certain amount of lattice defects can be effectively produced, and the diffusion channels of Li ions can be widened, thus improving the lithium ion transmission efficiency and conductivity, thereby improving the electrochemical performance such as ionic and electronic conductivity of the positive electrode material prepared by compounding the two materials. If too few doping elements are used, the effect of improving the electrochemical performance such as ionic and electronic conductivity of the positive electrode material is not obvious. If too many doping elements are used, unfavorable lattice defects may be produced, the stability of the crystal structure of the positive electrode material may be deteriorated, and the electrochemical performance of the material may be deteriorated. In some embodiments, in the nickel-cobalt-manganese-aluminum quaternary positive electrode material, the doping amount of the doping element A ranges from 1500 ppm to 4000 ppm.

In some embodiments, the doping amount of the doping element B in the lithium iron phosphate positive electrode material ranges from 1000 ppm to 3500 ppm.

In some embodiments, the doping element A is consistent with that of the doping element B. By keeping types of doping elements in the nickel-cobalt-manganese-aluminum quaternary positive electrode material consistent with those in the lithium iron phosphate positive electrode material is beneficial to the improvement of the ion conductivity and electronic conductivity of the composite positive electrode material, this is because lithium ion transmission and electron transmission process is smooth by doping the same element, thereby facilitating the improvement of the electrochemical performance of the composite positive electrode material.

In some embodiments, each of the doping element A and the doping element B independently include Ti, K, Nb; or each of the doping element A and the doping element B independently include Ca, Sr, Zr. Ti, K, and Nb can replace the Li, Fe, and O sites in the LFP, thereby producing favorable lattice defects, and facilitate Li ion diffusion channels. Further, the combination of these doping elements has a significant effect on improving the electrochemical performance of the composite positive electrode material, thereby effectively optimizing the battery performance. Ca, Sr, and Zr can replace the Li, Fe, and O sites in the LFP, and can produce favorable lattice defects, and facilitate Li ion diffusion channels. Further, the combination of these doping elements has a significant effect on improving the electrochemical performance of the composite positive electrode material, thereby effectively optimizing the battery performance.

According to a second aspect of the present disclosure, a method of preparing the above-mentioned positive electrode material is provided, which includes: S1. mixing a nickel-cobalt-manganese-aluminum quaternary positive electrode material and a lithium iron phosphate positive electrode material in water to obtain a mixed system, and grinding particles in the mixed system to a size ranging from 1 µm to 10 µm to obtain a slurry; S2. subjecting the slurry to spray drying at a drying temperature ranging from 90°C to 100°C, and controlling the size of the particles after drying in a range of 5 µm to 20 µm; S3. followed by performing jet-milling and mechanical milling sequentially to obtain a positive electrode material. By using the above method, the mixing effect of the nickel-cobalt-manganese-aluminum quaternary positive electrode material and the lithium iron phosphate positive electrode material is relatively good, so that the transmission is more smooth during the charging and discharging cycle. Meanwhile, due to better mixing effects, the composite positive electrode material has higher electrical conductivity and powder compaction density, thereby effectively improving the energy density, capacity and rapid charging performance of the positive electrode material.

In some embodiments, in step S1, during the grinding process, the zirconium ball has a size ranging from 3 µm to 8 µm, and the volume filling ratio ranges from 50% to 80%.

In some embodiments, in step S1, grinding is performed by using a fine grinder.

In some embodiments, in step S3, the specific conditions for performing jet-milling are as follows: a pressure of the bearing protective gas is above 450 mbar, a pressure of the void protective gas is above 350 mbar, a rotating speed of a classifier ranges from 1000 rpm to 2000 rpm, a grinding air pressure ranges from 2 bar to 5 bar, and weight of material ranges from 250 kg to 650 kg. The specific conditions for performing mechanical milling are as follows: particle size of feeding materials ranges from 10 µm to 20 µm, a spindle rotation speed ranges from 800 rpm to 1500 rpm, power of motor ranges from 500 kW to 900 kW, and charging amount ranges from 400 kg to 500 kg. Under the above-mentioned conditions for performing jet-milling and mechanical milling, it is possible to control the particle size and the particle size distribution of the positive electrode material within a certain range, which is conducive to taking into account in multiple aspects such as the compaction density, energy density, circulation performance, and safety performance of the positive electrode material.

In some embodiments, jet-milling is performed by using a CGS jet mill.

In some embodiments, mechanical milling is performed by using a ALPA mechanical mill.

In some embodiments, in step S3, screening is required after the jet-milling and mechanical milling. The purpose of screening is to remove oversized particles to prevent them from affecting the overall comprehensive performance of the particles.

In some embodiments, in step S1, a method of preparing a nickel-cobalt-manganese-aluminum quaternary positive electrode material includes steps as follows: a1. mixing a first lithium source, a nickel source, a cobalt source, and a manganese source in water, and keeping the temperature at 70°C to 100°C to react for a time period ranging from 5 h to 10 h to obtain a first mixed system; a2. cooling the first mixed system to a temperature ranging from 50°C to 60°C, then adding a first carbon source and a doping element A source thereto, and keeping the temperature at 50°C to 60°C to react for a time period ranging from 4 h to 5 h to obtain a second mixed system; a3. adding acid to the second mixed system to adjust the pH to a range of 3 to 6, and grinding the particles until the particle size ranges from 5 µm to 10 µm to obtain a third mixed system; and a4. drying the third mixed system to remove moisture, and calcining to obtain a nickel-cobalt-manganese-aluminum quaternary positive electrode material.

In some embodiments, in step a1, a mass ratio of the first lithium source to the nickel source to the cobalt source to the manganese source is (1 to 3):(2 to 6):(1 to 3):(2 to 4):(1 to 5).

In some embodiments, the first lithium source includes lithium nitrate; the nickel source includes hydrated nickel carbonate; the cobalt source includes hydrated cobalt nitrate; and the manganese source includes hydrated manganese acetate.

In some embodiments, in step a2, the addition amount of the carbon source and the doping element A source is calculated based on a mass ratio of the carbon source to the doping element A source in the second mixed system ranging from 6% to 9% and 1% to 3%, respectively.

In some embodiments, in step a2, the first carbon source includes glucose, and polyethylene glycol (PEG), a mass ratio of glucose to polyethylene glycol is (4 to 6):(2 to 3); and the doping element A source includes A compound containing the doping element A.

In some embodiments, in step a3, the addition amount of acid is calculated based on the mass fraction of acid in the third mixed system ranging from 8% to 11%.

In some embodiments, in step a3, the acid includes nitric acid, acetic acid and acrylic acid, and the mass ratio of nitric acid to acetic acid to acrylic acid is (1 to 3):(1.5 to 2.6):(5.5 to 6.4).

In some embodiments, in step a3, the grinding is performed by using a fine grinder, and the zirconium ball has a size ranging from 1 µm to 15 µm, and the volume filling ratio ranges from 80% to 90%.

In some embodiments, in step a4, the calcination process is divided into 6 intervals, interval 1: a temperature ranges from 100°C to 150°C, and a time period for keeping the temperature ranges from 1 h to 2 h; interval 2: a temperature ranges from 200°C to 280°C, and a time period for keeping the temperature ranges from 1.5 h to 2.5 h; interval 3: a temperature ranges from 400°C to 600°C, and a time period for keeping the temperature ranges from 0.5 h to 1.5 h; interval 4: a temperature ranges from 700°C to 800°C; and a time period for keeping the temperature ranges from 4 h to 8 h; interval 5: a temperature ranges from 150°C to 350°C, and a time period for keeping the temperature ranges from 0.5 h to 1 h; and interval 6: a temperature ranges from 50°C to 100°C, and a time period for keeping the temperature ranges from 2 h to 3 h; followed by cooling to room temperature.

In some embodiments, in step a4, calcination is performed by using a kiln having a length of 70 m to 80 m.

In some embodiments, in step S1, the method of preparing the lithium iron phosphate positive electrode material includes steps as follows: b1. mixing an iron phosphate source, a second lithium source, and a second carbon source in water for a time period ranging from 2 h to 5 h to obtain a first mixture; b2. adding a doping element B source to the first mixture, continuing mixing for a time period ranging from 0.5 h to 1 h, and grinding the particles until the particle size ranges from 30 µm to 50 µm to obtain a second mixture; b3. subjecting the second mixture to spray drying, controlling the particle size after drying to be in a range of 20 µm to 30 µm, and performing calcining to obtain a lithium iron phosphate positive electrode material.

In some embodiments, in step b1, the mass ratio of the iron phosphate source to the second lithium source to the second carbon source is (6.5 to 7.2):(1.0 to 1.8):(0.3 to 1.5).

In some embodiments, the phosphate source includes ferric phosphate; the second lithium source includes lithium carbonate; the second carbon source includes glucose, polyethylene glycol (PEG), and the mass ratio of glucose to polyethylene glycol is (0.2 to 1.0):(0.1 to 0.5).

In some embodiments, in step b2, the addition amount of the doping element B source is calculated based on a mass ratio of doping element B source in the second mixture ranging from 3% to 8%.

In some embodiments, the dopant element B source includes B compound containing the dopant element B.

In some embodiments, in step b2, the grinding is performed by using a coarse grinder or a fine grinder, the zirconium ball has a size ranging from 1 µm to 15 µm, and the volume filling ratio ranges from 60% to 85%.

In some embodiments, in step b3, the calcination process is divided into five intervals, interval 1: a temperature ranges from 100°C to 200°C, and a time period for keeping the temperature ranges from 0.5 h to 2 h; interval 2: a temperature ranges from 300°C to 500°C, and a time period for keeping the temperature ranges from 1 h to 2 h; interval 3: a temperature ranges from 500°C to 800°C, and a time period for keeping the temperature ranges from 6 h to 8 h; interval 4: a temperature ranges from 300°C to 400°C, and a time period for keeping the temperature ranges from 2 h to 3 h; and interval 5: a temperature ranges from 50°C to 100°C, and a time period for keeping the temperature ranges from 2 h to 3 h; followed by cooling to room temperature.

In some embodiments, in step b3, calcination is performed by using a kiln having a length of 60 m to 80 m.

According to a third aspect of the present disclosure, a positive electrode sheet including the above-mentioned positive electrode materials is provided. The positive electrode sheet made of the above-mentioned positive electrode materials has high compaction density, and excellent ionic conductivity or the electron conductivity, so that the structure of the positive electrode sheet can be kept stable after multiple charging and discharging cycles.

According to a fourth aspect of the present disclosure, a battery including the positive electrode sheet is provided. The positive electrode sheet has a compaction density ranging from 3.2 g/cm³ to 4.2 g/cm³. The battery prepared by using the above-mentioned positive electrode sheet has high structure stability, high compaction density, and excellent ionic and electronic conductivity described above, has high energy density, high safety performance, and excellent fast charging performance.

For a better understanding of the solutions of the present disclosure by those skilled in the art, the technical solutions in the examples of the present disclosure are clearly and completely described and discussed below. Obviously, the examples described herein are only some of the examples of the present disclosure but not all of them.

### Example 1

### (1) Preparation of a nickel-cobalt-manganese-aluminum quaternary positive electrode material

The nickel-cobalt-manganese-aluminum quaternary positive electrode material (NCMA) in this example was prepared according to steps as follows:
a1. Mixing lithium nitrate, hydrated nickel carbonate, hydrated cobalt nitrate, and hydrated manganese acetate in water, and reacting at a temperature of 85°C for 8 h to obtain a first mixed system. The mass ratio of lithium nitrate to hydrated nickel carbonate to hydrated cobalt nitrate to hydrated manganese acetate was (1 to 2):(4 to 6):(2 to 3):(1 to 3):(2 to 4).
a2. Cooling the first mixed system to a temperature of 55°C, followed by adding glucose, polyethylene glycol (PEG), and a titanium compound thereto, and reacting at a temperature of 55°C for 4.5 h to obtain a second mixed system. The addition amounts of glucose, polyethylene glycol (PEG), and titanium compound in the second mixed system were calculated based on a mass ratio of glucose, polyethylene glycol (PEG), and titanium compound (TiO₂) in the second mixed system being 5%, 2.5%, and 2%, respectively.
a3. Adding acid to the second mixed system to adjust the pH to 4.5, and grinding the particles until the particle size ranges from 5 µm to 10 µm to obtain a third mixed system. Specifically, the grinding was performed by using a fine grinded, the zirconium ball had a size ranging from 1 µm to 15 µm, and the volume filling ratio ranged from 80% to 90%.
a4. Drying the third mixed system to remove moisture, and performing calcining to obtain a nickel-cobalt-manganese-aluminum quaternary positive electrode material, which had a chemical formula of Li_{1.5}Ni_{0.4}Mn_{0.2}Co_{0.2}Al_{0.1}Ti_{0.1}O₂, and a final doping amount of titanium element (Ti) in the nickel-cobalt-manganese-aluminum quaternary positive electrode material was 2500 ppm. Specifically, calcination was performed by using a kiln having a length of 70 m to 80 m. The calcination process was divided into 6 intervals, interval 1: a temperature of 125°C, and a time for keeping the temperature of 1.5 h; interval 2: a temperature of 240°C, and a time for keeping the temperature of 2 h; interval 3: a temperature of 500°C, and a time for keeping the temperature of 1 h; interval 4: a temperature of 750°C; and a time for keeping the temperature of 6 h; interval 5: a temperature of 250°C, and a time for keeping the temperature of 0.75 h; and interval 6: a temperature of 75°C, and a time for keeping the temperature of 2.5 h; followed by cooling to room temperature.

### (2) Preparation of a lithium iron phosphate positive electrode material

The lithium iron phosphate (LFP) positive electrode material in this example was prepared according to steps as follows: b1. Mixing iron phosphate, lithium carbonate, glucose, polyethylene glycol (PEG) in water for 3.5 h to obtain a first mixture; in which the mass ratio of iron phosphate to lithium carbonate to glucose to polyethylene glycol (PEG) was 6.85:1.4:0.6:0.3;
b2. Adding a titanium compound (TiO₂) to the first mixture, continuing mixing for 0.75h, and grinding the particles until the particle size ranges from 30 µm to 50 µm to obtain a second mixture; in which the addition amount of the titanium compound was calculated based on a mass ratio of the titanium compound in the second mixture being 5.5%; and the grinding was performed by using a coarse grinder or a fine grinder, the zirconium ball had a size ranging from 1 µm to 15 µm, and the volume filling ratio ranged from 60% to 85%;
b3. Subjecting the second mixture to spray drying, controlling the particle size after drying to be in a range of 20 µm to 30 µm, and performing calcining to obtain a lithium iron phosphate positive electrode material, which had a chemical formula of Li_{1.5}Fe(PO₄)_{1.5}Ti_{0.3}, and a final doping amount of titanium element (Ti) in the lithium iron phosphate positive electrode material was 2000 ppm; specifically, calcination was performed by using a kiln having a length of 60 m to 80 m. The calcination process was divided into 5 intervals, interval 1: a temperature of 150°C, and a time for keeping the temperature of 1.2 h; interval 2: a temperature of 400°C, and a time for keeping the temperature of 1.5 h; interval 3: a temperature of 750°C, and a time for keeping the temperature of 7.5 h; interval 4: a temperature of 350°C; and a time for keeping the temperature of 2.5 h; and interval 5: a temperature of 75°C, and a time for keeping the temperature of 2.5 h; followed by cooling to room temperature.

### (3) Preparation of a positive electrode material

The positive electrode material in this example was prepared according to steps as follows:
S1. Mixing the nickel-cobalt-manganese-aluminum quaternary positive electrode material and the lithium iron phosphate positive electrode material prepared as mentioned above in water to obtain a mixed system, and grinding particles in the mixed system to have a size ranging from 1 µm to 10 µm to obtain a slurry; in which the mass ratio of nickel-cobalt-manganese-aluminum quaternary positive electrode material to lithium iron phosphate positive electrode material was 2.5:7.5; specifically, the grinding was performed by using a fine grinder, the zirconium ball had a size ranging from 3 µm to 8 µm, and the volume filling ratio ranged from 50% to 80%.
S2. Subjecting the slurry to spray drying at a drying temperature ranging from 90°C to 100°C, and controlling the size of the particles after drying to be in a range of 5 µm to 20 µm.
S3. Performing jet-milling and mechanical milling sequentially to obtain a positive electrode material. The particle size of the positive electrode material ranged from 0.1 µm to 2 µm. The particle size distribution was as follows: a mass ratio of particles with a size of 0.1µm to 0.3 µm was 40%, a mass ratio of particles with a size of 0.3 µm to 0.5 µm was 20%, a mass ratio of particles with a size of 0.5 µm to 1 µm was 20%, a mass ratio of particles with a size of 1 µm to 1.5 µm was 10%, and a mass ratio of particles with a size of 1.5 µm to 2 µm was 10%. The specific conditions for performing jet-milling were as follows: a CGS jet mill was used, in which pressure of the bearing protective gas was 550 mbar, pressure of the void protective gas was 500 mbar, the rotating speed of a classifier was 1600 rpm, the grinding air pressure was 3 bar, and weight of the material was 500 kg. The specific conditions for performing mechanical milling were as follows: ALPA mechanical mill was used, in which particle size of feeding materials was 13 µm, the spindle rotation speed was 1000 rpm, the power of motor was 650 kW, and the charging amount was 450 kg.

### (4) Preparation of a positive electrode sheet, a negative electrode sheet, and a battery

① Preparation of a positive electrode sheet: the positive electrode materials prepared as mentioned above, a conductive agent 1-SUPER P Li (SP), a conductive agent 2-carbon nanotube (CNT), and a binder-polyvinylidene difluoride (PVDF) were added to N-Methylpyrrolidone (NMP) at a mass ratio of 96.9:1.6:0.5:1.2, and mixed uniformly to obtain a positive electrode slurry. The obtained positive electrode slurry was used to prepare a positive electrode sheet. The obtained positive electrode sheet had a compaction density of 3.6 g/cm³.
② Preparation of a negative electrode sheet: graphite, a conductive agent-SUPER P Li (SP), a binder 1-carboxymethyl cellulose (CMC), and a binder 2-styrene-butadiene rubber (SBR) were mixed in water at a mass ratio of 96.0:0.7:1.3:2.0 to obtain a negative electrode slurry. The obtained negative electrode slurry was used to prepare a negative electrode sheet.
③ The above-mentioned positive electrode sheet and negative electrode sheet, 1 mol/L LiPF₆/EC+DMC+EMC (v/v=1:1:1) electrolyte, PE+ alumina separator, and a shell were used to assemble a soft-packed battery through a conventional production process.

### Example 2

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method basically the same as that in Example 1, and the only difference lies in that the mass ratio of the nickel-cobalt-manganese-aluminum quaternary positive electrode material to the lithium iron phosphate positive electrode material was 0.5:9.5 in S1 during the process of preparing the positive electrode material in this example. The remaining operations are the same as those in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 3

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method basically the same as that in Example 1, and the only difference lies in that the mass ratio of the nickel-cobalt-manganese-aluminum quaternary positive electrode material to the lithium iron phosphate positive electrode material was 7.0:3.0 in S1 during the process of preparing the positive electrode material in this example. The remaining operations are the same as those in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 4

### (1) Preparation of a nickel-cobalt-manganese-aluminum quaternary positive electrode material.

The nickel-cobalt-manganese-aluminum quaternary positive electrode material in this example was prepared according to a method the same as that in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method basically the same as that in Example 1, and the only difference lies in that the mass ratio of the nickel-cobalt-manganese-aluminum quaternary positive electrode material to the lithium iron phosphate positive electrode material was 1:9 in S1 during the process of preparing the positive electrode material in this example. The remaining operations are the same as those in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 5

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method basically the same as that in Example 1, and the only difference lies in that the mass ratio of the nickel-cobalt-manganese-aluminum quaternary positive electrode material to the lithium iron phosphate positive electrode material was 4:6 in S1 during the process of preparing the positive electrode material in this example. The remaining operations are the same as those in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 6

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of lithium iron phosphate positive electrode material

The lithium iron phosphate positive electrode material in this example was prepared according to a method the same as that in Example 1.

### (3) Preparation of a positive electrode material

The positive electrode material in this example was prepared according to a method basically the same as that in Example 1, and the differences lie in that the specific conditions for performing jet-milling and mechanical milling in step S3, and particle size distribution of the final obtained positive electrode material, which were listed as follows:
a mass ratio of particles with a size of 0.1 µm to 0.3 µm was 30%, a mass ratio of particles with a size of 0.3 µm to 0.5 µm was 25%, a mass ratio of particles with a size of 0.5 µm to 1 µm was 20%, a mass ratio of particles with a size of 1 µm to 1.5 µm was 15%, and a mass ratio of particles with a size of 1.5 µm to 2 µm was 10%. The specific conditions for performing jet-milling were as follows: a CGS jet mill was used, in which a pressure of the bearing protective gas was 500 mbar, a pressure of the void protective gas was 460 mbar, the rotating speed of a classifier was 1300 rpm, the grinding air pressure was 2 bar, and weight of the material was 480 kg. The specific conditions for performing mechanical milling were as follows: ALPA mechanical mill was used, in which the particle size of feeding materials was 15 µm, the spindle rotation speed was 1200 rpm, the power of motor was 800 kW, and the charging amount was 470 kg. The remaining operations are the same as those in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 7

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of a lithium iron phosphate anode material

The lithium iron phosphate positive electrode material in this example was prepared according to a method the same as that in Example 1.

### (3) Preparation of a positive electrode material

The positive electrode material in this example was prepared according to a method basically the same as that in Example 1, and the differences lie in that the specific conditions for performing jet-milling and mechanical milling in step S3, and particle size distribution of the final obtained positive electrode material, which were listed as follows:

a mass ratio of particles with a size of 0.1 µm to 0.3 µm was 50%, a mass ratio of particles with a size of 0.3 µm to 0.5 µm was 20%, a mass ratio of particles with a size of 0.5 µm to 1 µm was 25%, a mass ratio of particles with a size of 1 µm to 1.5 µm was 5%, and a mass ratio of particles with a size of 1.5 µm to 2 µm was 10%. The specific conditions for performing jet-milling were as follows: a CGS jet mill was used, in which a pressure of the bearing protective gas was 600 mbar, a pressure of the void protective gas was 530 mbar, the rotating speed of a classifier was 1800 rpm, the grinding air pressure was 4 bar, and weight of the material was 550 kg. The specific conditions for performing mechanical milling were as follows: ALPA mechanical mill was used, in which the particle size of feeding materials was 13 µm, the spindle rotation speed was 1000 rpm, the power of motor was 650 kW, and the charging amount was 430 kg. The remaining operations are the same as those in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 8

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that the addition amount of the titanium compound in step a2 during the process of preparing the nickel-cobalt-manganese-aluminum quaternary positive electrode material in this example was controlled so that the doping amount of titanium element (Ti) in the final obtained nickel-cobalt-manganese-aluminum quaternary positive electrode material was 200 ppm. The remaining operations are the same as those in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 9

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that the addition amount of the titanium compound in step a2 during the process of preparing the nickel-cobalt-manganese-aluminum quaternary positive electrode material in this example was controlled so that the doping amount of titanium element (Ti) in the final obtained nickel-cobalt-manganese-aluminum quaternary positive electrode material was 1500 ppm. The remaining operations are the same as those in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 10

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that the addition amount of the titanium compound in step a2 during the process of preparing the nickel-cobalt-manganese-aluminum quaternary positive electrode material in this example was controlled so that the doping amount of titanium element (Ti) in the final obtained nickel-cobalt-manganese-aluminum quaternary positive electrode material was 1500 ppm. The remaining operations are the same as those in Example 1.

### (2) Preparation of a lithium iron phosphate positive electrode material

The lithium iron phosphate positive electrode material in this example was prepared according to a method the same as that in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 11

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of a lithium iron phosphate positive electrode material

The lithium iron phosphate positive electrode material in this example was prepared according to a method basically the same as that in Example 1, and the differences lie in that in step b2, the addition amount of the titanium compound was controlled, and the addition amount of the titanium compound was calculated, so that the mass ratio of the titanium element (Ti) in the final obtained lithium iron phosphate positive electrode material was 6000 ppm during the process of preparing the lithium iron phosphate positive electrode material in this example. The remaining operations are the same as those in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 12

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that in step a2, the titanium compound was replaced by a calcium compound (CaCO₃), and the chemical formula of the nickel-cobalt-manganese-aluminum quaternary positive electrode material was Li_{1.5}Ni_{0.3}Mn_{0.2}Co_{0.2}Al_{0.1}Ca_{0.2}O₂ during the process of preparing the nickel-cobalt-manganese-aluminum quaternary positive electrode material in this example. The remaining operations are the same as those in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a calcium compound (CaCO₃), and the chemical formula of the lithium iron phosphate positive electrode material was Li_{1.5}Fe(PO₄)_{1.5}Ca_{0.6}. The remaining operations are the same as those in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 13

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that in step a2, the titanium compound was replaced by a Sc compound (Sc₂O₃), and the chemical formula of the nickel-cobalt-manganese-aluminum quaternary positive electrode material was Li_{1.5}Ni_{0.36}Mn_{0.2}Co_{0.2}Al_{0.1}Sc_{0.14}O₂ during the process of preparing the nickel-cobalt-manganese-aluminum quaternary positive electrode material in this example. The remaining operations are the same as those in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a Sc compound (Sc₂O₃), and the chemical formula of the lithium iron phosphate positive electrode material was Li_{1.5}Fe(PO₄)_{1.5}Sc_{0.4}. The remaining operations are the same as those in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 14

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that in step a2, the titanium compound was replaced by a V compound (VO₂), and the chemical formula of the nickel-cobalt-manganese-aluminum quaternary positive electrode material was Li_{1.5}Ni_{0.4}Mn_{0.2}Co_{0.2}Al_{0.1}V_{0.1}O₂ during the process of preparing the nickel-cobalt-manganese-aluminum quaternary positive electrode material in this example. The remaining operations are the same as those in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a V compound (VO₂), and the chemical formula of the lithium iron phosphate positive electrode material was Li_{1.5}Fe(PO₄)_{1.5}V_{0.3}. The remaining operations are the same as those in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 15

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that in step a2, the titanium compound was replaced by a mixture of the Ti compound (TiO₂), the K compound (K₂CO₃), and the Nb compound (Nb₂O₅), and the amounts of the Ti compound, the K compound, and the Nb compound were controlled, so that the chemical formula of the nickel-cobalt-manganese-aluminum quaternary positive electrode material was Li_{1.5}Ni_{0.42}Mn_{0.2}Co_{0.2}Al_{0.1}A_{0.08}O₂, in which A includes Ti, K, and Nb elements, and the molar ratio of Ti, K, and Nb was 6:1:3 during the process of preparing the nickel-cobalt-manganese-aluminum quaternary positive electrode material in this example. The remaining operations are the same as those in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a mixture of a Ti compound (TiO₂), a K compound (K₂CO₃), and a Nb compound (Nb₂O₅), the amounts of the Ti compound, the K compound, and the Nb compound were controlled, so that the chemical formula of the lithium iron phosphate positive electrode material was Li_{1.5}Ni_{0.42}Mn_{0.2}Co_{0.2}Al_{0.1}A_{0.08}O₂, in which A includes Ti, K, and Nb elements, and the molar ratio of Ti, K, and Nb was 6:1:3. The remaining operations are the same as those in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 16

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that in step a2, the titanium compound was replaced by a mixture of a Ca compound (CaCO₃), a Sr compound (SrO), and a Zr compound (ZrO₂), and the amounts of the Ca compound, the Sr compound, and the Zr compound were controlled, so that the chemical formula of the nickel-cobalt-manganese-aluminum quaternary positive electrode material was Li_{1.5}Ni_{0.43}Mn_{0.2}Co_{0.2}Al_{0.1}A_{0.07}O₂, in which A includes Ca, Sr, and Zr elements, and the molar ratio of Ca, Sr, and Zr was 4:3:3 during the process of preparing the nickel-cobalt-manganese-aluminum quaternary positive electrode material in this example. The remaining operations are the same as those in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a mixture of a Ca compound (CaCO₃), a Sr compound (SrO), and a Zr compound (ZrO₂), the amounts of the Ca compound, the Sr compound, and the Zr compound were controlled, so that the chemical formula of the lithium iron phosphate positive electrode material was Li_{1.5}Fe(PO₄)_{1.5}B_{0.2}, in which A includes Ca, Sr, and Zr elements, and the molar ratio of Ca, Sr, and Zr was 5:2:3. The remaining operations are the same as those in Example 1.

### (3) Preparation of a positive electrode material

The positive electrode material in this example was prepared according to a method the same as that in Example 1.

### (4) Preparation of a positive electrode sheet, a negative electrode sheet, and a battery

The positive electrode sheet, the negative electrode sheet, and the battery in this example were prepared according to methods the same as those in Example 1.

### Example 17

### (1) Preparation of a nickel-cobalt-manganese-aluminum quaternary positive electrode material

The nickel-cobalt-manganese-aluminum quaternary positive electrode material in this example was prepared according to a method the same as that in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a Y compound (Y₂O₃), and the chemical formula of the lithium iron phosphate positive electrode material was Li_{1.5}Fe(PO₄)_{1.5}Y_{0.16}. The remaining operations are the same as those in Example 1.

### (3) Preparation of a positive electrode material

The positive electrode material in this example was prepared in accordance with Example 1.

### (4) Preparation of positive electrode sheet, negative electrode sheet, battery

The positive electrode sheet, the negative electrode sheet, and the battery in this example were prepared according to methods the same as those in Example 1.

### Example 18

### (1) Preparation of a nickel-cobalt-manganese-aluminum quaternary positive electrode material

The nickel-cobalt-manganese-aluminum quaternary positive electrode material in this example was prepared according to a method basically the same as that in Example 1, and the differences lie in that in step a2, the titanium compound was replaced by a Mg compound (MgO), and the chemical formula of the nickel-cobalt-manganese-aluminum quaternary positive electrode material was Li_{1.5}Ni_{0.3}Mn_{0.2}Co_{0.2}Al_{0.1}Mg_{0.2}O₂ during the process of preparing the nickel-cobalt-manganese-aluminum quaternary positive electrode material in this example. The remaining operations are the same as those in Example 1.

### (2) Preparation of a lithium iron phosphate positive electrode material

The lithium iron phosphate positive electrode material in this example was prepared according to a method basically the same as that in Example 1, and the differences lie in that in step b2, the titanium compound was replaced by a Mg compound (MgO), and the chemical formula of the lithium iron phosphate positive electrode material was Li_{1.5}Fe(PO4)_{1.5}Mg_{0.8}. The remaining operations are the same as those in Example 1.

### (3) Preparation of a positive electrode material

The positive electrode material in this example was prepared in accordance with Example 1.

### (4) Preparation of a positive electrode sheet, a negative electrode sheet, and a battery

The positive electrode sheet, the negative electrode sheet, and the battery in this example were prepared according to methods the same as those in Example 1.

### Comparative Example 1

### (1) Preparation of a nickel-cobalt-manganese-aluminum quaternary positive electrode material

The nickel-cobalt-manganese-aluminum quaternary positive electrode material in this comparative example was prepared according to a method the same as that in Example 1.

### (2) Preparation of a lithium iron phosphate positive electrode material

The lithium iron phosphate positive electrode material in this comparative example was prepared according to a method the same as that in Example 1.

### (3) Preparation of a positive electrode material

The positive electrode material in this comparative example was prepared according to a method basically the same as that in Example 1, and the differences lie in that in step S1, the mass ratio of the nickel-cobalt-manganese-aluminum quaternary positive electrode material to the lithium iron phosphate positive electrode material was 0.3:9.7. The remaining operations are the same as those in Example 1.

### (4) Preparation of a positive electrode sheet, a negative electrode sheet, and a battery

The positive electrode sheet, the negative electrode sheet, and the battery in this comparative example were prepared according to methods the same as those in Example 1.

### Comparative Example 2

### (1) Preparation of a nickel-cobalt-manganese-aluminum quaternary positive electrode material

The nickel-cobalt-manganese-aluminum quaternary positive electrode material in this comparative example was prepared according to a method the same as that in Example 1.

### (2) Preparation of a lithium iron phosphate positive electrode material

The lithium iron phosphate positive electrode material in this comparative example was prepared according to a method the same as that in Example 1.

### (3) Preparation of a positive electrode material

The positive electrode material in this comparative example was prepared according to a method basically the same as that in Example 1, and the differences lie in that in step S1, the mass ratio of the nickel-cobalt-manganese-aluminum quaternary positive electrode material to the lithium iron phosphate positive electrode material was 8:2. The remaining operations are the same as those in Example 1.

### (4) Preparation of a positive electrode sheet, a negative electrode sheet, and a battery

The positive electrode sheet, the negative electrode sheet, and the battery in this comparative example were prepared according to methods the same as those in Example 1.

### Comparative Example 3

### (1) Preparation of a nickel-cobalt-manganese-aluminum quaternary positive electrode material

The nickel-cobalt-manganese-aluminum quaternary positive electrode material in this comparative example was prepared according to a method the same as that in Example 1.

### (2) Preparation of a lithium iron phosphate positive electrode material

The lithium iron phosphate positive electrode material in this comparative example was prepared according to a method the same as that in Example 1.

### (3) Preparation of a positive electrode material

The positive electrode material in this comparative example was prepared according to a method basically the same as that in Example 1, and the differences lie in that in steps S1 and S2 were not performed, that is, no wet grinding and mixing is performed, and dry mixing and grinding is directly performed until particle size ranged from 5 µm to 20 µm, followed by performing jet-milling and mechanical milling in step S3. The remaining operations are the same as those in Example 1.

### (4) Preparation of a positive electrode sheet, a negative electrode sheet, and a battery

The positive electrode sheet, the negative electrode sheet, and the battery in this comparative example were prepared according to methods the same as those in Example 1.

### Test example

### 1. Experimental construction method

The batteries obtained in all the above examples and comparative examples were tested for energy density, capacity, cycle capacity retention rate, and fast charging performance. The specific test methods are as follows:

Energy density: a) the batteries were discharged to 2.5 V at a constant current of 0.5 C; b) and left to stand for 5 min; c) then the batteries were charged at a constant current and constant voltage of 0.5 C, the cutoff voltage was 3.65 V, and the cutoff current was 0.05 C; d) and left to stand for 5 min; e) and then the batteries were discharged to 2.5 V at a constant current of 0.5 C; f) the steps b) to e) were repeated for 13 times; the energy density was calculated based on the last discharge capacity; the calculation formula is as follows: energy density = (capacity * voltage)/mass (here, it means mass energy density).

Capacity: a) the batteries were discharged to 2.5 V at a constant current of 0.5 C; b) and left to stand for 5 min; c) then the batteries were charged at a constant current and constant voltage of 0.5 C, the cutoff voltage was 3.65 V, and the cutoff current was 0.05 C; d) and left to stand for 5 min; e) and then the batteries were discharged to 2.5 V at a constant current of 0.5 C; f) the steps b) to e) were repeated for 13 times; the discharge capacity was calculated based on the last discharge capacity.

Cycle capacity retention rate: a) the batteries were left to stand for 4 h to 6 h at a corresponding temperature; b) the batteries were discharged to 2.5 V at a constant current of 0.5 C; c) and left to stand for 5 min; d) then the batteries were charged at a constant current and constant voltage of 0.5C, the cutoff voltage was 3.65 V, and the cutoff current was 0.05 C; e) and left to stand for 5 min; f) and then the batteries were discharged to 2.5 V at a constant current of 0.5 C; g) the steps b) to e) were repeated for 3 times, and the last discharge capacity was recorded as the battery capacity Q0; h) the batteries were left to stand for 5 min; i) and the batteries were charged at a constant current and constant voltage of a current corresponding to 0.5 Q0 until the battery voltage reached 3.65 V, the cutoff voltage was 0.05 C, and left to stand for 5 min; j) then the batteries were discharged to 2.5 V at a constant current corresponding to Q0; k) the above charging and discharging process was repeated for N cycles starting from step h); capacity retention rate/% = discharge capacity at the Nth cycle/maximum discharge capacity*100. In this experiment, the capacity retention after 15,000 cycles was tested.

Fast charging performance (full-charging time at 5 C): a) the batteries were discharged to 2.5 V at a constant current of 0.5 C; b) and left to stand for 5 min; C) then the batteries were charged at a constant current and constant voltage of 0.5 C, the cutoff voltage was 3.65 V and the cutoff current was 0.05 C; d) and left to stand for 5 min; e) and then the batteries were discharged to 2.5 V at a constant current of 0.5 C; f) the steps b) to e) were repeated for 3 times, the last discharge capacity was recorded as the battery capacity Q0, and the batteries were charged at a constant current and constant voltage of a current corresponding to 0.01 Q to 0.1 Q, the cutoff voltage was 2.7 V; g) the batteries were left to stand for 5 min; h) and the batteries were charged at a constant current and constant voltage at 5 C rate, the cutoff voltage was 3.65 V, then the batteries were charged at a constant voltage, the cutoff current was 0.05 C; the time it takes for the voltage to go from 2.5 V to 3.65 V was calculated, which was the full-charging time of under fast charging.

### 2. Experimental results

The test results of energy density, capacity, cycle capacity retention rate, and fast charge performance of the batteries obtained in all the above examples and comparative examples are shown in Table 1.

**Table 1 Test results of battery performance obtained in the examples and comparative examples**

| Group | Energy density, Wh/kg | Capacity, Ah | Cycle capacity retention rate,% | Fast charging performance, min |
|---|---|---|---|---|
| Example 1 | 250 | 1.95 | 80 | 5.0 |
| Example 2 | 217 | 1.69 | 70 | 8.1 |
| Example 3 | 231 | 1.80 | 76 | 6.3 |
| Example 4 | 233 | 1.83 | 78 | 5.7 |
| Example 5 | 235 | 1.85 | 77 | 6.1 |
| Example 6 | 245 | 1.91 | 80 | 5.2 |
| Example 7 | 248 | 1.94 | 78 | 5.4 |
| Example 8 | 232 | 1.84 | 75 | 7.1 |
| Example 9 | 236 | 1.88 | 79 | 5.3 |
| Example 10 | 243 | 1.86 | 78 | 5.8 |
| Example 11 | 235 | 1.84 | 76 | 6.2 |
| Example 12 | 249 | 1.95 | 79 | 5.4 |
| Example 13 | 248 | 1.94 | 77 | 5.6 |
| Example 14 | 246 | 1.92 | 76 | 5.5 |
| Example 15 | 252 | 1.96 | 81 | 4.8 |
| Example 16 | 254 | 1.98 | 82 | 4.7 |
| Example 17 | 249 | 1.95 | 79 | 5.3 |
| Example 18 | 230 | 1.86 | 76 | 6.5 |
| Comparative Example 1 | 195 | 1.52 | 65 | 15.5 |
| Comparative Example 2 | 200 | 1.56 | 62 | 14.2 |
| Comparative Example 3 | 185 | 1.45 | 60 | 20.8 |

As can be seen from Table 1, the battery prepared from the positive electrode material provided in the present disclosure has high energy density, capacity, and cyclic capacity retention rate, and can be fully charged in a short time at a large rate, and has good comprehensive performance. In particular, the positive electrode material provided in the present disclosure is a composite positive electrode material compounded by a nickel-cobalt-manganese-aluminum quaternary positive electrode material and a lithium iron phosphate positive electrode material at a specific mass ratio. Further, both the nickel-cobalt-manganese-aluminum quaternary positive electrode material and the lithium iron phosphate positive electrode material are doped with other metal elements, which effectively improves the energy density, capacity, cyclic capacity retention rate, and fast charging performance of the lithium iron phosphate positive electrode material, with specific reference to Examples 1 to 18.

In Comparative Examples 1 and 2, the mass ratio of the nickel-cobalt-manganese-aluminum quaternary positive electrode material and the lithium iron phosphate positive electrode material is not within the range of (0.3 to 5.0):(7.0 to 9.5), which results in a decrease in the composite effect of the two materials, that is, the synergistic effect of the two materials decreases, **thus resulting** in a decrease in the ionic and electronic conductivity of the final obtained positive electrode material, and reducing the electrochemical performance of the positive electrode material, thereby reducing the energy density, capacity, cycle capacity retention rate, and fast charging performance of the battery.

In Comparative Example 3, steps S1 and S2 are not performed during mixing, that is, no wet grinding and mixing is performed, and dry mixing and grinding is directly performed until particle size ranges from 5 µm to 20 µm, and then jet-milling and mechanical milling are sequentially performed. As a result, the mixing effect of the nickel-cobalt-manganese-aluminum quaternary positive electrode material and the lithium iron phosphate positive electrode material is deteriorated, and the electrochemical performance of the final obtained positive electrode material is deteriorated in various aspects, thereby deteriorating the performance of the battery in various aspects.

By comparing Example 1 with Examples 2 to 5, it can be known that although the mass ratios of the nickel-cobalt-manganese-aluminum quaternary positive electrode material to the lithium iron phosphate positive electrode material in Examples 1 to 5 are within the range of (0.3 to 5.0):(7.0 to 9.5), different mass ratios of the two materials within this range still have a certain effect on the performance of the positive electrode material,. However, when the mass ratios of the quaternary nickel-cobalt-manganese-aluminum positive electrode material to the lithium iron phosphate positive electrode material are within the range of (1 to 4):(6 to 9), the two materials have a synergistic effect, especially when the above mass ratio is 2.5:7.5, and the synergistic effect of the two materials is best, and the battery has good electrochemical performance.

By comparing Example 1 with Examples 6 to 7, it can be known that the particle size distributions of the final obtained positive electrode materials in Examples 6 to 7 are different from that in Example 1, which also results in a difference in the performance of the batteries prepared from the positive electrode materials, indicating that the particle size distribution of the positive electrode material has a certain effect on the electrochemical performance of the battery. Further, it can be seen from Example 1 and Examples 6 to 7 that when the particle size distribution of the positive electrode material is as follows: the mass ratio of particles with a size of 0.1 µm to 0.3 µm is 40%, the mass ratio of particles with a size of 0.3 µm to 0.5 µm is 20%, the mass ratio of particles with a size of 0.5 µm to 1 µm is 20%, the mass ratio of particles with a size of 1 µm to 1.5 µm is 10%, and the mass ratio of particles with a size of 1.5 µm to 2 µm is 10%, the battery has good performance in all aspects, that is, such a particle size distribution is beneficial to the performance of the battery.

By comparing Example 1 with Examples 8 to 11, it can be known that in Example 8, the nickel-cobalt-manganese-aluminum quaternary positive electrode material has less doping element A; and in Example 11, the lithium iron phosphate positive electrode material has greater doping element B, as a result, battery performance of them are lower than that of Examples 1, 9, and 10. It shows that by controlling the content of the doping element A in the nickel-cobalt-manganese-aluminum quaternary positive electrode material and the doping element B in the lithium iron phosphate positive electrode material within a certain range is beneficial to the modification of these doping elements on the nickel-cobalt-manganese-aluminum quaternary positive electrode material and the lithium iron phosphate positive electrode material, thereby improving the performance of the final obtained positive electrode material, and further improving the performance of the battery in various aspects.

Example 1 and Examples 12 to 18 are compared. Firstly, by specifically comparing Example 1 with Examples 12 to 14, it can be known that when both the nickel-cobalt-manganese-aluminum quaternary positive electrode material and the lithium iron phosphate positive electrode material are doped with a single doping element, the Ti element has a good improvement effect on the two materials, so that the batteries prepared from the positive electrode materials have good related performance. Secondly, by specifically comparing Example 1 with Examples 15 to 16, it can be known that in Examples 15 and 16, both the nickel-cobalt-manganese-aluminum quaternary positive electrode material and the lithium iron phosphate positive electrode material are doped with three kinds of doping elements. Under the combined effect of multiple doping elements, the performance of the positive electrode material can be improved in many aspects, for example, the crystal stability, ion transmission capacity and conductivity of the positive electrode material can be improved, thereby effectively improving the performance of the battery in various aspects. Thirdly, by specifically comparing Example 1 with Example 17, it can be known that in Example 17, the type of doping element in the nickel-cobalt-manganese-aluminum quaternary positive electrode material is different from that in the lithium iron phosphate positive electrode material, as a result, the lithium ion transmission and the electron transmission performance are reduced, and the electrochemical performance of the composite positive electrode material is reduced, that is, the performance of the battery is reduced. Fourthly, by specifically comparing Example 1 with Example 18, it can be known that in Example 18, the doping element in both the nickel-cobalt-manganese-aluminum quaternary positive electrode material and the lithium iron phosphate positive electrode material is Mg, and Mg has a relatively poor effect on the performance improvement of the two materials, this may be due to the fact that, when Mg participates in the synthesis of the two materials, the crystal structure formed together has relatively poor stability, which is not conducive to the deintercalation of lithium ions, thereby reducing the lithium ion transmission efficiency, and finally causing a decrease in the performance of the battery in various aspects.

## Claims

1. A positive electrode material comprising a nickel-cobalt-manganese-aluminum quaternary positive electrode material and a lithium iron phosphate positive electrode material;
wherein a chemical formula of the nickel-cobalt-manganese-aluminum quaternary positive electrode material is Li₍₁₊ᵤ₎NiᵥMn_{w}CoₓAl_{y}A_{z}O₂, wherein u≥0, v+w+x+y+z=1;
a chemical formula of the lithium iron phosphate positive electrode material is Li₁₊ₖFe(PO₄)₁₊ₘBₙ, wherein k, m, and n≥0; and both A and B are doping elements; and
a mass ratio of the nickel-cobalt-manganese-aluminum quaternary positive electrode material to the lithium iron phosphate positive electrode material is (0.5 to 7.0):(3.0 to 9.5).

2. The positive electrode material according to claim 1, wherein the doping element A comprises at least one of Ti, K, Ca, Sc, V, Rb, Sr, Y, Zr, Nb, Mo, Te, or Ru.

3. The positive electrode material according to claim 1 or 2, wherein the doping element B comprises at least one of Ti, K, Ca, Sc, V, Rb, Sr, Y, Zr, Nb, Mo, Te, or Ru.

4. The positive electrode material according to any one of claims 1 to 3, wherein the doping element A is same as the doping element B.

5. The positive electrode material according to any one of claims 1 to 3, wherein each of the doping element A and the doping element B independently comprises at least one of Ti, K, or Nb;
or, each of the doping element A and the doping element B independently comprises at least one of Ca, Sr, or Zr.

6. The positive electrode material according to any one of claims 1 to 5, wherein a particle size of the positive electrode material ranges from 0.1 µm to 2 µm, and a particle size distribution of the positive electrode material is as follows: a mass ratio of particles with a size of 0.1 µm to 0.3 µm ranges from 35% to 45%, a mass ratio of particles with a size of 0.3 µm to 0.5 µm ranges from 15% to 25%, a mass ratio of particles with a size of 0.5 µm to 1 µm ranges from 15% to 25%, a mass ratio of particles with a size of 1 µm to 1.5 µm ranges from 5% to 15%, and a mass ratio of particles with a size of 1.5 µm to 2 µm ranges from 5% to 15%.

7. The positive electrode material according to claim 6, wherein the particle size distribution of the positive electrode material is as follows: the mass ratio of particles with the size of 0.1 µm to 0.3 µm is 40%, the mass ratio of particles with the size of 0.3 µm to 0.5 µm is 20%, the mass ratio of particles with the size of 0.5 µm to 1 µm is 20%; the mass ratio of particles with the size of 1 µm to 1.5 µm is 10%, and the mass ratio of particles with the size of 1.5 µm to 2 µm is 10%.

8. The positive electrode material according to any one of claims 1 to 7, wherein a doping amount of the doping element A in the nickel-cobalt-manganese-aluminum quaternary positive electrode material ranges from 200 ppm to 6000 ppm.

9. The positive electrode material according to claim 8, wherein the doping amount of the doping element A ranges from 1500 ppm to 4000 ppm.

10. The positive electrode material according to any one of claims 1 to 9, wherein a doping amount of the doping element B in the lithium iron phosphate positive electrode material ranges from 200 ppm to 6000 ppm.

11. The positive electrode material according to claim 10, wherein the doping amount of the doping element B ranges from 1000 ppm to 3500 ppm.

12. A method of preparing the positive electrode material according to any one of claims 1 to 11, comprising:
S1. mixing the nickel-cobalt-manganese-aluminum quaternary positive electrode material and the lithium iron phosphate positive electrode material in water to obtain a mixed system, and grinding particles in the mixed system to have a particle size ranging from 1 µm to 10 µm to obtain a slurry;
S2. subjecting the slurry to spray drying at a drying temperature ranging from 90°C to 100°C, and controlling the particle size of the particles after drying to be in a range of 5 µm to 20 µm; and
S3. performing jet-milling and mechanical milling sequentially to obtain the positive electrode material.

13. The method according to claim 12, wherein in the S1, a method of preparing the nickel cobalt manganese aluminum quaternary positive electrode material comprises:
a1. mixing a first lithium source, a nickel source, a cobalt source, and a manganese source in water, and keeping the temperature at 70°C to 100°C to react for a time period ranging from 5 h to 10 h to obtain a first mixed system;
a2. cooling the first mixed system to a temperature ranging from 50°C to 60°C, then adding a first carbon source and a doping element A source thereto, and keeping the temperature at 50°C to 60°C to react for a time period ranging from 4 h to 5 h to obtain a second mixed system;
a3. adding an acid to the second mixed system to adjust a pH to a range of 3 to 6, and grinding the particles until the particle size ranges from 5 µm to 10 µm to obtain a third mixed system; and
a4. drying the third mixed system to remove moisture, and performing calcining to obtain the nickel-cobalt-manganese-aluminum quaternary positive electrode material.

14. The method according to claim 13, wherein in the a1, a mass ratio of the first lithium source to the nickel source to the cobalt source to the manganese source is (1 to 3):(2 to 6):(1 to 3):(2 to 4):(1 to 5).

15. The method according to claim 13 or 14, wherein in the a4, the calcining is divided into six intervals, interval 1: a temperature ranges from 100°C to 150°C, and a time period for keeping the temperature ranges from 1 h to 2 h; interval 2: a temperature ranges from 200°C to 280°C, and a time period for keeping the temperature ranges from 1.5 h to 2.5 h; interval 3: a temperature ranges from 400°C to 600°C, and a time period for keeping the temperature ranges from 0.5 h to 1.5 h; interval 4: a temperature ranges from 700°C to 800°C; and a time period for keeping the temperature ranges from 4 h to 8 h; interval 5: a temperature ranges from 150°C to 350°C, and a time period for keeping the temperature ranges from 0.5 h to 1 h; and interval 6: a temperature ranges from 50°C to 100°C, and a time period for keeping the temperature ranges from 2 h to 3 h.

16. The method according to any one of claims 12 to 15, wherein in the S1, a method of preparing the lithium iron phosphate positive electrode material comprises:
b1. mixing an iron phosphate source, a second lithium source, and a second carbon source in water for a time period ranging from 2 h to 5 h to obtain a first mixture;
b2. adding a doping element B source to the first mixture, continuing mixing for a time period ranging from 0.5 h to 1 h, and grinding the particles until the particle size ranges from 30 µm to 50 µm to obtain a second mixture; and
b3. subjecting the second mixture to spray drying, controlling the particle size after drying to be in a range of 20 µm to 30 µm, and performing calcining to obtain the lithium iron phosphate positive electrode material.

17. The method according to claim 16, wherein in the b1, a mass ratio of the iron phosphate source to the second lithium source to the second carbon source is (6.5 to 7.2):(1.0 to 1.8):(0.3 to 1.5).

18. The method according to claim 16 or 17, wherein in the b3, the calcining is divided into five intervals, interval 1: a temperature ranges from 100°C to 200°C, and a time period for keeping the temperature ranges from 0.5 h to 2 h; interval 2: a temperature ranges from 300°C to 500°C, and a time period for keeping the temperature ranges from 1 h to 2 h; interval 3: a temperature ranges from 500°C to 800°C, and a time period for keeping the temperature ranges from 6 h to 8 h; interval 4: a temperature ranges from 300°C to 400°C, and a time period for keeping the temperature ranges from 2 h to 3 h; and interval 5: a temperature ranges from 50°C to 100°C, and a time period for keeping the temperature ranges from 2 h to 3 h.

19. A positive electrode sheet comprising the positive electrode material according to any one of claims 1 to 11; wherein a compaction density of the positive electrode sheet ranges from 3.2 g/cm³ to 4.2 g/cm³.

20. A battery comprising the positive electrode sheet according to claim 19.
